# EUROPEAN PATENT APPLICATION

(11) **EP 4 715 180 A1**
(43) Date of publication of application: **25.03.2026**
(21) Application number: 23938577.6
(22) Date of filing: 20.12.2023
(51) Int. Cl.: F02C 6/16, F02C 1/02, F02C 6/06

(54) **COMPRESSED AIR ENERGY STORAGE DEVICE**

(30) Priority: 19.05.2023 JP 2023083034
(71) Applicant: Hitachi Industrial Equipment Systems Co., Ltd., Tokyo 101-0021 (JP)
(72) Inventor: KOYAMA, Masaki, Tokyo 100-8280 (JP); NAGATA, Shuhei, Tokyo 100-8280 (JP); CHIBA, Kotaro, Tokyo 100-8280 (JP)
(74) Representative: MERH-IP Matias Erny Reichl Hoffmann Patentanwälte PartG mbB
(86) International application number: PCT/JP2023/045809
(87) International publication number: WO 2024/241616

(57) **Abstract**

Provided is a compressed air energy storage device that includes: a compressor that is driven by an electric motor; a pressure accumulation tank that stores compressed air compressed by the compressor; an expander that is driven by the compressed air stored in the pressure accumulation tank; a generator that is driven by the expander; and a pneumatic pressure supply pipe that supplies the compressed air to a pneumatic apparatus driven by a pneumatic pressure, the compressor compresses air to a pressure exceeding a predetermined pressure set higher than a pneumatic usage pressure for driving the pneumatic apparatus, compressed air whose pressure exceeds the predetermined pressure is supplied to the expander to generate electric power, and compressed air whose pressure is equal to or lower than the predetermined pressure is supplied to the pneumatic apparatus via the pneumatic pressure supply pipe.

## Description

### Technical Field

The present invention relates to a compressed air energy storage device.

### Background Art

Electric power generation using renewable energy such as wind power generation and solar power generation depends on weather conditions, and thus the amount of electric power generation fluctuates and is not stable in some cases. A compressed air energy storage (CAES) system has been known as a system for leveling outputs of electric power generation against such fluctuations.

A compressed air energy storage device (CAES device) using the CAES system accumulates electric energy in a pressure accumulation tank as compressed air, and when electric power is needed, an expander is driven by the compressed air to operate a generator, and electric energy is generated to level the outputs.

In such a CAES device, for example, Patent Document 1 discloses a compressed air energy storage device that stores compressed air in tanks having different sizes according to the cycle of electric power fluctuation. Patent Document 2 discloses that, in a compressed air energy storage device, compressed air whose pressure is lower than a predetermined pressure is discharged without passing through an expander, so that the operating efficiency of the expander is improved.

### Prior Art Document

### Patent Documents

Patent Document 1: Patent No. 6368577
Patent Document 2: JP-2017-8867-A

### Summary of the Invention

### Problem to be Solved by the Invention

When renewable energy power generation is introduced for the purpose of realizing carbon neutrality in a plant or a business site, electric power leveling technology and energy supply and demand adjustment technology are required to use renewable energy as a main power supply. For example, in the case where electric power is generated by a solar power generation device, the CAES device stores energy by operating a compressor to accumulate the pressure of compressed air in a time zone during the daytime when surplus electric power is generated. However, although the amount of electric power generation is large in the daytime, the operation rate of production equipment in a plant is high and the amount of electric power usage is also large. Therefore, there is room for improvement in order to efficiently store energy while meeting the demand for electric power in a plant in the daytime and to effectively shift electric power (leveling of electric power) to a time zone in which the amount of electric power generation is small.

An object of the present invention is to provide a compressed air energy storage device capable of reasonably leveling electric power by electric power supply and demand adjustment in a plant.

### Means for Solving the Problem

In order to achieve the above object, the present invention provides a compressed air energy storage device including: a compressor that is driven by an electric motor; a pressure accumulation tank that stores compressed air compressed by the compressor; an expander that is driven by the compressed air stored in the pressure accumulation tank; a generator that is driven by the expander; and a pneumatic pressure supply pipe that supplies the compressed air to a pneumatic apparatus driven by a pneumatic pressure, in which the compressor compresses air to a pressure exceeding a predetermined pressure set higher than a pneumatic usage pressure for driving the pneumatic apparatus, compressed air whose pressure exceeds the predetermined pressure is supplied to the expander to generate electric power, and compressed air whose pressure is equal to or lower than the predetermined pressure is supplied to the pneumatic apparatus via the pneumatic pressure supply pipe.

### Advantages of the Invention

According to the present invention, it is possible to reasonably level electric power by electric power supply and demand adjustment in a plant.

### Brief Description of the Drawings

[FIG. 1] FIG. 1 is a schematic view of a CAES device according to a first embodiment of the present invention.
[FIG. 2] FIG. 2 a schematic view of a CAES device according to a second embodiment of the present invention.
[FIG. 3] FIG. 3 is a schematic view of a CAES device according to a third embodiment of the present invention.
[FIG. 4] FIG. 4 is a schematic view of a CAES device according to a fourth embodiment of the present invention.
[FIG. 5] FIG. 5 is a schematic view of a CAES device according to a fifth embodiment of the present invention.
[FIG. 6] FIG. 6 is a schematic view of a CAES device according to a sixth embodiment of the present invention.
[FIG. 7] FIG. 7 is a schematic view of a CAES device according to a seventh embodiment of the present invention.

### Modes for Carrying Out the Invention

Embodiments of the present invention will be described below by using the drawings.

### (First Embodiment)

### (1-1) CAES device

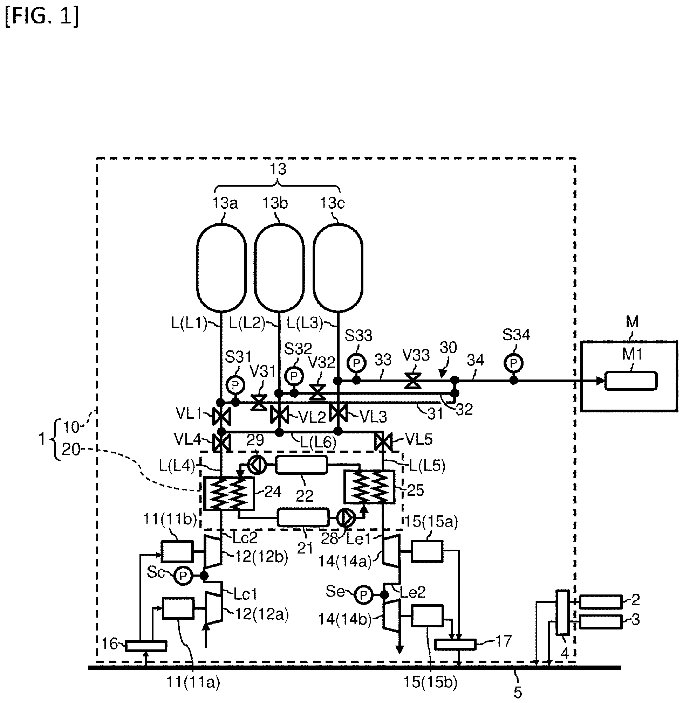

FIG. 1 is a schematic view of a CAES device according to a first embodiment of the present invention. The CAES device 1 is a device for leveling electric power (grid electric power) of a power transmission and distribution system 5 to which a renewable energy power generation device such as a solar power generation device 2 or a wind power generation device 3 is connected. The renewable energy power generation device can supply electric power to, for example, a plant M. In the case where the amount of electric power generated by the renewable energy power generation device is insufficient for the amount of electric power used by the plant M, the plant M compensates the insufficiency with grid electric power. The renewable energy power generation device is also connected to the power transmission and distribution system 5 via a power conditioner 4. When the amount of electric power generated by the renewable energy power generation device is larger than the amount of electric power used by the plant M, the CAES device 1 stores (charges) a part of grid electric power as energy of compressed air. In addition, when the amount of electric power generated by the renewable energy power generation device is smaller than the amount of electric power used by the plant M, the CAES device 1 generates electric power with the stored compressed air, and returns (discharges) the electric power to the power transmission and distribution system 5. In addition, the CAES device 1 can supply compressed air to a pneumatic apparatus M1 driven by a pneumatic pressure in the plant M.

The CAES device 1 of the present embodiment includes a compressor/expander unit 10, a heat accumulation unit 20, and a pneumatic pressure supply pipe 30. The compressor/expander unit 10 includes a motor (electric motor) 11, a compressor 12, a pressure accumulation tank 13, an expander 14, and a generator 15. The heat accumulation unit 20 includes heat accumulation tanks 21 and 22 containing a heat accumulation medium such as water and heat exchangers 24 and 25.

The CAES device 1 compresses air to a pressure exceeding a predetermined pressure P2 (for example, approximately 0.6 MPa) set higher than a pneumatic usage pressure P1 (for example, approximately 0.5 MPa, P1 < P2) for driving the pneumatic apparatus M1 by the compressor 12, supplies the compressed air whose pressure exceeds the predetermined pressure P2 to the expander 14 to generate electric power, and supplies the compressed air whose pressure is equal to or lower than the predetermined pressure P2 to the pneumatic apparatus M1 via the pneumatic pressure supply pipe 30. The predetermined pressure P2 may have a range. However, the lower limit value of the predetermined pressure P2 is set higher than the pneumatic usage pressure P1, and the upper limit value of the predetermined pressure P2 is set lower than a storage pressure P3. The storage pressure P3 is the upper limit value of the in-tank pressure of the pressure accumulation tank 13 in the specifications.

### (1-1a) Compressor/expander unit

The motor 11 is a prime mover for driving the compressor 12. The CAES device 1 of the present embodiment is provided with a plurality of motors 11, and two motors 11a and 11b are illustrated in FIG. 1. The motors 11a and 11b are connected to the power transmission and distribution system 5 via a power conditioner 16.

The compressor 12 is a rotary machine driven by the motor 11 to compress air. The CAES device 1 of the present embodiment is provided with a plurality of compressors 12, and two compressors of a compressor 12a that is a low pressure compressor and a compressor 12b that is a high pressure compressor are illustrated in FIG. 1. The suction port of the compressor 12a opens in the atmosphere, and the discharge port of the compressor 12a is connected to the suction port of the compressor 12b via a pipe Lc1. The discharge port of the compressor 12b is connected to the heat exchanger 24 via a pipe Lc2, and is further connected to the pressure accumulation tank 13 via a pipe system L through the heat exchanger 24. The rotary shaft of the compressor 12a is mechanically coupled to the output shaft of the motor 11a, and the compressor 12a carries out a low stage-side compression stroke for sucking and compressing the atmosphere. The rotary shaft of the compressor 12b is mechanically coupled to the output shaft of the motor 11a, and the compressor 12b carries out a high stage-side compression stroke for further compressing the compressed air compressed by the compressor 12a.

In the compressor/expander unit 10, multi-stage compression is performed by these compressors 12a and 12b, and the compressed air compressed by the compressors 12a and 12b is stored in the pressure accumulation tank 13 via the heat exchanger 24. The CAES device 1 of the present embodiment is provided with a plurality of pressure accumulation tanks 13, and three pressure accumulation tanks 13a to 13c are illustrated in FIG. 1. The above-described pipe system L includes a plurality of pipes L1 to L6. The pipe L4 is connected to the outlet of the compressed air of the heat exchanger 24, the pipe L5 is connected to the inlet of the compressed air of the heat exchanger 25, and the pipe L6 connects the pipes L4 and L5 to each other. The pipe L1 connects the pressure accumulation tank 13a, the pipe L2 connects the pressure accumulation tank 13b, and the pipe L3 connects the pressure accumulation tank 13c to the pipe L6. With the pipe system L, the pressure accumulation tanks 13a to 13c are connected in parallel to the heat exchangers 24 and 25.

The expander 14 is a rotary machine driven by the compressed air stored in the pressure accumulation tank 13. The CAES device 1 of the present embodiment is provided with a plurality of expanders 14, and two expanders of an expander 14a that is a high pressure expander driven by the compressed air from the pressure accumulation tank 13 and an expander 14b that is a low pressure expander driven by the compressed air discharged from the high pressure expander 14a are illustrated in FIG. 1. The pressure accumulation tank 13 is connected to the suction port of the expander 14a via the heat exchanger 25 and a pipe Le1, and the discharge port of the expander 14a is connected to the suction port of the expander 14b via a pipe Le2. The discharge port of the expander 14b opens in the atmosphere. The expander 14a carries out a high stage-side expansion stroke, and the expander 14b carries out a low stage-side expansion stroke. In the compressor/expander unit 10, multi-stage expansion is performed by these expanders 14a and 14b, and air discharged from the expander 14b is released to the atmosphere.

The generator 15 is driven by the expander 14 to generate electric power. The CAES device 1 of the present embodiment is provided with a plurality of generators 15, and two generators of a generator 15a driven by the expander 14a and a generator 15b driven by the expander 14b are illustrated in FIG. 1. The rotary shaft of the generator 15a is mechanically coupled to the output shaft of the expander 14a, and the rotary shaft of the generator 15b is mechanically coupled to the output shaft of the expander 14b. In addition, the generators 15a and 15b are connected to the power transmission and distribution system 5 via a power conditioner 17. The generators 15a and 15b are driven by the expanders 14a and 14b to generate electric power (regenerate electric power) and return the regenerated electric power to the power transmission and distribution system 5.

### (1-1b) Heat accumulation unit

In the heat accumulation unit 20, the heat of the compressed air compressed by the compressor 12 is recovered into the heat accumulation medium from a heat accumulation tank 22 by the heat exchanger 24. The high-temperature heat accumulation medium with the temperature raised by the heat exchanger 24 is stored in a heat accumulation tank 21. The heat of the high-temperature heat accumulation medium stored in the heat accumulation tank 21 is released to the compressed air by the heat exchanger 25, and the low-temperature heat accumulation medium with the temperature lowered by the heat exchanger 25 returns to the heat accumulation tank 22. The heat accumulation unit 20 is provided with pumps 28 and 29, and the heat accumulation medium is transferred by the pumps 28 and 29 and circulates through the heat accumulation unit 20.

### (1-1c) Pneumatic pressure supply pipe

The pneumatic pressure supply pipe 30 is a pipe for supplying compressed air from the CAES device 1 to the pneumatic apparatus M1 driven by a pneumatic pressure. The pneumatic apparatus M1 is, for example, an air-driven apparatus used in the plant M, and is driven by compressed air generated by a compressor X (not illustrated) installed in the plant as a pneumatic pressure source and supplied from an air pipe in the plant. In the present embodiment, the pneumatic pressure supply pipe 30 is connected to, for example, the air pipe in the plant in parallel with the compressor X and can supply the compressed air to the pneumatic apparatus M1 together with the compressor or on behalf of the compressor X.

In the present embodiment, the pneumatic pressure supply pipe 30 includes pipes 31 to 34 that connect the pressure accumulation tank 13 to the pneumatic apparatus M1 (the air pipe of the plant M). The pipe 31 is connected to the pipe L1 connected to the pressure accumulation tank 13a, the pipe 32 is connected to the pipe L2 connected to the pressure accumulation tank 13b, and the pipe 33 is connected to the pipe L3 connected to the pressure accumulation tank 13c. The pipes 31 to 33 join together and are connected to the pneumatic apparatus M1 via the pipe 34.

It should be noted that the pipe 31 is provided with a valve V31, the pipe 32 is provided with a valve V32, and the pipe 33 is provided with a valve V33. In addition, the above-described pipe L4 is provided with a valve VL4, and the pipe L5 is provided with a valve VL5. In addition, the above-described pipe L1 (a part farther from the pressure accumulation tank 13a than the branch potion of the pipe 31) is provided with a valve LV1. Similarly, the pipe L2 (a part farther from the pressure accumulation tank 13b than the branch portion of the pipe 32) is provided with a valve LV2, and the pipe L3 (a part farther from the pressure accumulation tank 13c than the branch portion of the pipe 33) is provided with a valve LV3. These valves V31 to V33 and VL1 to VL5 are opening/closing valves that open and close the corresponding pipes, and can be controlled for opening and closing by a control device (not illustrated), by adopting, for example, an electromagnetic drive type, and manual opening/closing valves can also be adopted.

In addition, the pipe 31 is provided with a pressure sensor S31, the pipe 32 is provided with a pressure sensor S32, the pipe 33 is provided with a pressure sensor S33, and the pipe 34 is provided with a pressure sensor S34. In addition, the above-described pipe Lc1 is provided with a pressure sensor Sc, and the pipe Le2 is provided with a pressure sensor Se. These pressure sensors S31 to S34, Sc, and Se are pressure sensors that detect the pressures of the corresponding pipes, the pressure in each part of the system of the CAES device 1 can be monitored by the pressures detected by these pressure sensors, and the automatic opening/closing control of the valves V31 to V33 and VL1 to VL5 can be performed by a control device (not illustrated) on the basis of the pressures detected by these pressure sensors.

### (1-2) Basic operation

Basic operations of the CAES device 1, specifically, a charging operation, a discharging operation, and a pneumatic pressure supply operation will be sequentially described.

### (1-2a) Charging operation

In the charging operation of generating and storing compressed air, the CAES device 1 operates as follows. During the charging operation, the valves V31 to V33 of the pneumatic pressure supply pipe 30 and the valve VL5 of the pipe L5 of the heat exchanger 25 are typically closed. In addition, the valve VL4 of the pipe L4 of the heat exchanger 24 is opened.

First, the motors 11a and 11b are driven by electric power input from the power transmission and distribution system 5. The compressors 12a and 12b are driven by the motors 11a and 11b, and two-stage compression is performed by the compressor 12a and the compressor 12b. In the compressor 12a, the atmosphere is sucked from the suction port to perform adiabatic compression of the first stage. In the compressor 12b, the compressed air discharged from the discharge port of the compressor 12a is sucked to perform adiabatic compression of the second stage, and high-pressure and high-temperature compressed air is discharged. The high-temperature and high-pressure compressed air flows into the heat exchanger 24 and exchanges heat with the low-temperature heat accumulation medium supplied from the heat accumulation tank 22 to the heat exchanger 24. By this heat exchange, the low-temperature heat storage medium becomes high in temperature, and is stored in the high temperature-side heat accumulation tank 21. On the other hand, the compressed air lowers the temperature and flows into the pressure accumulation tank 13 to be stored.

At this time, the compressed air is stored in the order of, for example, the pressure accumulation tanks 13a, 13b, and 13c. That is, in the case where each of the pressures of the pressure accumulation tanks 13a, 13b, and 13c is less than the predetermined storage pressure P3 (for example, approximately 1.2 MPa, P1 < P2 < P3), the valves VL2 and VL3 of the pressure accumulation tanks 13b and 13c are closed, the valve VL1 of the pressure accumulation tank 13a is opened, and the compressed air is fed into the pressure accumulation tank 13a. Thereafter, when the pressure of the pressure accumulation tank 13a detected by the pressure sensor S31 reaches the storage pressure P3, the valves VL1 and VL3 of the pressure accumulation tanks 13a and 13c are closed, the valve VL2 of the pressure accumulation tank 13b is opened, and the storage destination of the compressed air is switched to the pressure accumulation tank 13b. When the pressure of the pressure accumulation tank 13b detected by the pressure sensor S32 reaches the storage pressure P3, the valves VL1 and VL2 of the pressure accumulation tanks 13a and 13b are closed, the valve VL3 of the pressure accumulation tank 13c is opened, and the storage destination of the compressed air is switched to the pressure accumulation tank 13c. When the pressure of the pressure accumulation tank 13c detected by the pressure sensor S33 reaches the storage pressure P3, the valve VL3 is closed, and the storage of the compressed air into the pressure accumulation tank 13c is stopped.

By the above operation, a part of grid electric power is converted into energy of the compressed air or the heat accumulation medium and stored (charged) in the CAES device 1.

### (1-2b) Discharging operation

In the discharging operation in which the generator is driven by the compressed air to generate electric power, the CAES device 1 operates as follows. During the discharging operation, the valves V31 to V33 of the pneumatic pressure supply pipe 30 and the valve VL4 of the pipe L4 of the heat exchanger 24 are typically closed. In addition, the valve VL5 of the pipe L5 of the heat exchanger 25 is opened.

First, the compressed air stored in the pressure accumulation tank 13 is supplied to the heat exchanger 25. At this time, the compressed air of a high-pressure pressure accumulation tank is given priority. In the case where each of the pressure accumulation tanks is at the storage pressure P3, the compressed air is supplied in a predetermined order (for example, in the order of the pressure accumulation tanks 13a, 13b, and 13c). For example, in the case where each of the pressure accumulation tanks 13a, 13b, and 13c is at the storage pressure P3, the valves VL2 and VL3 of the pressure accumulation tanks 13b and 13c are closed, the valve VL1 of the pressure accumulation tank 13a is opened, and the compressed air of the pressure accumulation tank 13a is fed into the heat exchanger 25. Thereafter, when the pressure of the pressure accumulation tank 13a detected by the pressure sensor S31 is lowered to the predetermined pressure P2, the valves VL1 and VL3 of the pressure accumulation tanks 13a and 13c are closed, the valve VL2 of the pressure accumulation tank 13b is opened, and the supply source of the compressed air to the heat exchanger 25 is switched to the pressure accumulation tank 13b. When the pressure of the pressure accumulation tank 13b detected by the pressure sensor S32 is lowered to the predetermined pressure P2, the valves VL1 and VL2 of the pressure accumulation tanks 13a and 13b are closed, the valve VL3 of the pressure accumulation tank 13c is opened, and the supply source of the compressed air to the heat exchanger 25 is switched to the pressure accumulation tank 13c. When the pressure of the pressure accumulation tank 13c detected by the pressure sensor S33 is lowered to the predetermined pressure P2, the valve VL3 is closed, and the supply of the compressed air from the pressure accumulation tank 13c to the heat exchanger 25 is stopped.

The compressed air supplied from the pressure accumulation tank 13 flows into the heat exchanger 25 and exchanges heat with the high-temperature heat accumulation medium supplied from the heat accumulation tank 21 to the heat exchanger 25. By this heat exchange, the high-temperature heat accumulation medium becomes low in temperature, and is stored in the low temperature-side heat accumulation tank 22. On the other hand, the compressed air raises the temperature and is sucked into the expander 14a to perform adiabatic expansion of the first stage, thereby driving the expander 14a. The compressed air adiabatically expanded by the expander 14a is sucked into the expander 14b to perform adiabatic expansion of the second stage, thereby driving the expander 14b. The low-temperature and low-pressure air adiabatically expanded by the expander 14b is released to the atmosphere from the discharge port of the expander 14b. When the expanders 14a and 14b are driven by the two-stage expansion of the compressed air, the generators 15a and 15b are driven by the expanders 14a and 14b, respectively, and the outputs of electric power generation of the generators 15a and 15b are supplied to the power transmission and distribution system 5 via the power conditioner 17.

By the above operation, the compressed air energy stored in the CAES device 1 is regenerated and returned (discharged) to the grid electric power.

### (1-2c) Pneumatic pressure supply operation

In a pneumatic pressure supply operation in which compressed air whose pressure is approximately the predetermined pressure P2 is supplied to the pneumatic apparatus M1, the CAES device 1 operates as follows.

In the pneumatic pressure supply operation, for example, the compressed air is supplied to the pneumatic apparatus M1 in order from a pressure accumulation tank whose pressure is lowered to the predetermined pressure P2 (in principle, the pneumatic usage pressure P1 or higher) among the pressure accumulation tanks 13a to 13c. Alternatively, in the case where a plurality of pressure accumulation tanks having approximately the predetermined pressure P2 exists, the compressed air is supplied to the pneumatic apparatus M1 from a pressure accumulation tank having a lower pressure being given priority.

For example, in the case where the pressures of the pressure accumulation tanks 13a and 13b are high pressures close to the storage pressure P3 and the pressure accumulation tank 13c is at a pressure close to the predetermined pressure P2, the valve V33 of the pipe 33 of the pneumatic pressure supply pipe 30 corresponding to the pressure accumulation tank 13c is opened first, the valve VL3 of the pipe L3 of the pressure accumulation tank 13c is closed, and the compressed air stored in the pressure accumulation tank 13c is supplied to the pneumatic apparatus M1. In this case, the valves V31 and V32 corresponding to the pressure accumulation tanks 13a and 13b of the pneumatic pressure supply pipe 30 are closed. In this manner, the compressed air whose pressure is approximately the predetermined pressure P2 is appropriately supplied from the pressure accumulation tanks 13a to 13c to the pneumatic apparatus M1, by switching the opening and closing of the valves V31 to V33 and VL1 to VL3.

It should be noted that in the case where a plurality of pressure accumulation tanks is provided as in the CAES device 1 of the present embodiment, the compressed air is typically supplied from any one pressure accumulation tank to the pneumatic apparatus M1. For example, in the case where the compressed air is supplied from the pressure accumulation tank 13c to the pneumatic apparatus M1 and the pressure of the pressure accumulation tank 13c is lower than the pneumatic usage pressure P1, if the pressure of any one of the pressure accumulation tanks 13a and 13b is approximately the predetermined pressure P2, the supply source of the compressed air to the pneumatic apparatus M1 is switched to the pressure accumulation tank 13a or the pressure accumulation tank 13b by valve operations.

### (1-3) Operating mode

Operating modes of the CAES device 1 will be described.

### (1-3a) Operating mode in which only charging is performed

In the operating mode in which only charging is performed, the CAES device 1 performs only the above-described charging operation in which the compressed air is generated and stored.

### (1-3b) Operating mode in which only discharging is performed

In the operating mode in which only discharging is performed, the CAES device 1 performs only the above-described discharging operation in which the generator is driven by the compressed air to generate electric power.

### (1-3c) Operating mode in which only pneumatic pressure supply is performed

In the operating mode in which only pneumatic pressure supply is performed, the CAES device 1 performs only the pneumatic pressure supply operation.

### (1-3d) Operating mode in which charging and pneumatic pressure supply are simultaneously performed

In the operating mode in which charging and pneumatic pressure supply are simultaneously performed, the CAES device 1 simultaneously performs the above-described charging operation and pneumatic pressure supply operation. In this case, different pressure accumulation tanks are used for the charging operation and the pneumatic pressure supply operation.

For example, in the case where the pressure accumulation tank 13a is at a high pressure near the storage pressure P3 and the pressure accumulation tanks 13b and 13c are at approximately the predetermined pressure P2, the compressed air compressed by the compressors 12a and 12b is stored in, for example, the pressure accumulation tank 13b where the in-tank pressure is lowered to the predetermined pressure P2. In addition, for the pneumatic pressure supply, the pressure accumulation tank 13c different from the pressure accumulation tank 13b where the in-tank pressure is lowered to the predetermined pressure P2 and used in the charging operation is used. The pressure of the pressure accumulation tank 13c is gradually lowered by the pneumatic pressure supply. When the pressure of the pressure accumulation tank 13c is lowered to the pneumatic usage pressure P1, the pneumatic pressure supply by the pressure accumulation tank 13c cannot be continued any longer, and thus the supply source of the compressed air is switched to supply the compressed air from the pressure accumulation tank 13b to the pneumatic apparatus M1. At the same time, the storage destination of the compressed air compressed by the compressors 12a and 12b is switched from the pressure accumulation tank 13b to the pressure accumulation tank 13c.

### (1-3e) Operating mode in which discharging and pneumatic pressure supply are simultaneously performed

In the operating mode in which discharging and pneumatic pressure supply are simultaneously performed, the CAES device 1 simultaneously performs the above-described discharging operation and pneumatic pressure supply operation. In this case, different pressure accumulation tanks are used for the discharging operation and the pneumatic pressure supply operation.

For example, in the case where the pressure accumulation tank 13a is at a high pressure near the storage pressure P3 and the pressure accumulation tanks 13b and 13c are at approximately the predetermined pressure P2, the compressed air is supplied to the expanders 14a and 14b from the pressure accumulation tank 13a where the in-tank pressure is high. In addition, for the pneumatic pressure supply, for example, the pressure accumulation tank 13c where the in-tank pressure is lowered to the predetermined pressure P2 is used. The pressure of the pressure accumulation tank 13c is gradually lowered by the pneumatic pressure supply. When the pressure of the pressure accumulation tank 13c is lowered to the pneumatic usage pressure P1, the pneumatic pressure supply by the pressure accumulation tank 13c cannot be continued any longer, and thus the supply source of the compressed air is switched to supply the compressed air from the pressure accumulation tank 13b to the pneumatic apparatus M1.

### (1-4) Electric power supply and demand adjustment

Switching of an operating mode and electric power supply and demand adjustment of the CAES device 1 will be described.

### (1-4a) In the case where the amount of electric power generation exceeds demand for electric power

In the case where the amount of electric power generated by the renewable energy power generation device such as the solar power generation device 2 and the wind power generation device 3 connected to the power transmission and distribution system 5 exceeds the amount of electric power used by the plant M and surplus electric power is generated, the CAES device 1 is operated in the operating mode in which charging is performed and the surplus electric power is stored as compressed air. At this time, in the case where the demand for operating the pneumatic apparatus M1 is large and the amount of pneumatic pressure usage is large, the CAES device 1 is operated in the operating mode in which charging and pneumatic pressure supply are simultaneously performed. On the basis of monitoring data received from the plant M, an operator or a control device determines the demand for operating the pneumatic apparatus M1, and the operating mode is switched manually or automatically. By supplying the compressed air used in the pneumatic apparatus M1 from the pressure accumulation tank 13, the demand for electric power to produce the compressed air in the plant M is decreased, and the charging amount equivalent to 10% to 20% of the electric power used by the plant M is increased in the CAES device 1.

For example, in the case where there is no demand for operating the pneumatic apparatus M1 such as when a production facility of the plant M is stopped, the CAES device 1 is operated in the operating mode in which only charging is performed. Since the compressed air stored in the CAES device 1 can be used not only as discharging but also as a pneumatic pressure in the pneumatic apparatus M1, it is desirable that the compressed air is sufficiently stored during a period in which the demand for electric power is small. For example, in the case where the amount of electric power generated by the solar power generation device 2 is large and surplus electric power is generated in the daytime, the CAES device 1 is operated in the discharging mode at night, so that the amount of electric power usage during the day and night can be leveled, and the electric power cost can also be reduced by decreasing the amount of electric power usage of the power transmission and distribution system 5 in the daytime.

### (1-4a) In the case where the amount of electric power generation falls below demand for electric power

In the case where the amount of electric power generated by the renewable energy power generation device such as the solar power generation device 2 and the wind power generation device 3 connected to the power transmission and distribution system 5 is less than the amount of electric power used by the plant M, the CAES device 1 is operated in the operating mode in which discharging is performed, produces electric power from the compressed air, and supplies it to the power transmission and distribution system 5. At this time, in the case where the demand for operating the pneumatic apparatus M1 is large and the amount of pneumatic pressure usage is large, the CAES device 1 is operated in the operating mode in which discharging and pneumatic pressure supply are simultaneously performed. By supplying the compressed air used in the pneumatic apparatus M1 from the pressure accumulation tank 13, the demand for electric power to produce the compressed air in the plant M can be decreased, and the charging amount equivalent to 10% to 20% of the electric power used by the plant M can be increased in the CAES device 1.

In the case where there is no demand for operating the pneumatic apparatus M1, the CAES device 1 is operated in the operating mode in which only discharging is performed.

### (1-4c) In the case where electric power supply and demand are balanced

In the case where the amount of electric power generated by the renewable energy power generation device such as the solar power generation device 2 and the wind power generation device 3 connected to the power transmission and distribution system 5 is the same or substantially the same as the amount of electric power used by the plant M, the CAES device 1 is operated in the operating mode in which only pneumatic pressure supply is performed, and supplies the compressed air to the pneumatic apparatus M1. Since there is no demand for electric power to produce the compressed air in the plant M, the amount of electric power generated by the renewable energy power generation device and the amount of electric power used by the plant M are balanced at a value lower by approximately 10% to 20% as compared with the case of producing the compressed air in the plant M, and the scale of electric power generation of the renewable energy power generation device can be reduced.

### (1-5) Effect

For example, when renewable energy power generation is introduced at a facility such as the plant M for the purpose of realizing carbon neutrality, electric power leveling technology and energy supply and demand adjustment technology are required to use renewable energy as a main power supply. For example, in the case where the solar power generation device 2 is used, the CAES device 1 stores surplus energy by driving the compressor 12 to store the compressed air in the daytime when surplus electric power can be generated. However, although the amount of electric power generation is large in the daytime, the operation rate of production equipment or the like in the plant M is high and the amount of electric power used by the plant M is also large. In order to increase the amount of energy storage in the daytime so as to effectively shift electric power (leveling of electric power) to a time zone in which the amount of electric power generation is small, it is reasonable not only to improve the amount of electric power generated by the renewable energy power generation device but also to suppress the amount of electric power used by the plant M, which is the demand side.

On the other hand, in the present embodiment, by supplying the compressed air from the CAES device 1 to the pneumatic apparatus M1 used in the plant M as described above, the demand for electric power in the plant M can be reduced by the amount of electric power to drive a compressor (not illustrated) for pneumatic pressure supply in the plant M. It is said in general that the amount of electric power used by a pneumatic system for supplying the compressed air used as a power source in a plant is approximately 10% to 20% of the amount of electric power used by the plant. Therefore, by utilizing the compressed air stored in the CAES device 1 in the pneumatic system of the plant M as in the present embodiment, the required amount of pneumatic pressure supply can be secured while reducing the demand for electric power for pneumatic pressure supply in the plant M, and the amount of electric power used by the plant M can be largely decreased.

In this manner, the CAES device 1 can adjust the demand for electric power in the plant M by the pneumatic pressure supply while charging and discharging, and can adjust supply and demand through storage of surplus electric power, adjustment of electric power generation, and a demand response. According to the CAES device 1, it is possible to reasonably level the electric power by the electric power supply and demand adjustment of the plant M, for example, by suppressing the demand for electric power of the plant M in the daytime, and it is expected to contribute to using renewable energy as a main power supply and reducing the amount of usage of grid electric power.

### (Second Embodiment)

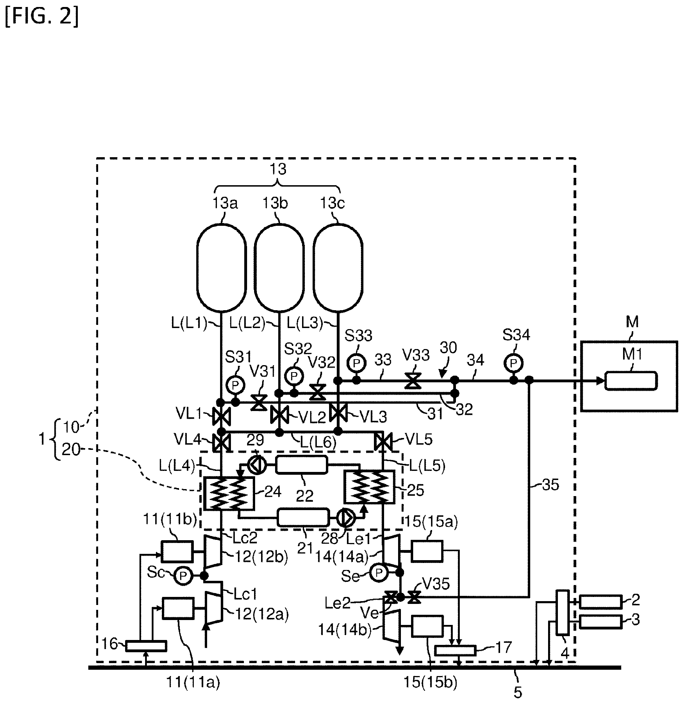

FIG. 2 is a schematic view of a CAES device according to a second embodiment of the present invention. Elements in FIG. 2 identical or corresponding to those of the embodiment already described are denoted by the same reference numerals as those of the already-presented drawing, and the description thereof is appropriately omitted.

### (2-1) CAES device

A CAES device 1 of the present embodiment is different from the first embodiment in that the pneumatic pressure supply pipe 30 includes a pipe 35 for connecting a pipe Le2 that connects the expander 14a of the low-pressure stage to the expander 14b of the high-pressure stage to the pneumatic apparatus M1. In the present embodiment, the pipe 35 connects the pipes Le2 and 34 to each other. In addition, a valve V35 is provided in the pipe 35, and a valve Ve is provided in the pipe Le2 (a part on the expander 14b side of the low-pressure stage relative to the branch portion of the pipe 35). The valves V35 and Ve are opening/closing valves similar to the valve V31 and the like. A pressure sensor Se is provided at a part in the pipe Le2 on the expander 14a side of the high-pressure stage relative to the branch portion of the pipe 35. Other hardware configurations of the CAES device 1 of the second embodiment are similar to those of the first embodiment.

### (2-2) Basic operation

An operation of the CAES device 1 of the second embodiment will be described. Since the charging operation and the discharging operation in the present embodiment are similar to those of the first embodiment, a pneumatic pressure supply operation will be described here.

Even in the present embodiment, as similar to the first embodiment, a pneumatic pressure can be supplied to the pneumatic apparatus M1 sequentially from the pressure accumulation tank whose pressure is lowered to the predetermined pressure P2, and in the case where a plurality of pressure accumulation tanks having approximately the predetermined pressure P2 exists, the compressed air can be supplied to the pneumatic apparatus M1 from a pressure accumulation tank having a lower pressure being given priority.

In addition, in the present embodiment, since the pipe 35 is included in the pneumatic pressure supply pipe 30, the discharging operation and the pneumatic pressure supply operation can be simultaneously performed with the compressed air supplied from the same pressure accumulation tank. For example, in the case where each of the pressure accumulation tanks 13a to 13c is at a high pressure close to the storage pressure P3 and there is no pressure accumulation tank whose pressure is lowered to approximately the predetermined pressure P2, one of the valves VL1 to VL3 is opened in a state where the valves V31 to V33, Ve, and VL4 are closed and the valves VL5 and V35 are opened. Accordingly, high-pressure compressed air is supplied from one of the pressure accumulation tanks 13a to 13c to the expander 14a of the first stage, electric power is generated by the generator 15a, and discharging can be performed. The pressure of the compressed air that has driven the expander 14a is lowered to approximately the predetermined pressure P2 by adiabatic expansion, and the compressed air whose pressure is lowered is discharged from the expander 14a and supplied to the pneumatic apparatus M1 by passing through the pipe 35 via the valve V35. In the present embodiment, the discharging operation by the one-stage expansion is performed only by the expander 14a of the expanders 14a and 14b, and the compressed air whose pressure is lowered by the one-stage expansion is supplied to the pneumatic apparatus M1.

### (2-3) Operating mode

In the present embodiment, the operating mode in which only one of charging, discharging, and pneumatic pressure supply is performed, and the operating mode in which charging and pneumatic pressure supply are simultaneously performed are similar to those of the first embodiment. Therefore, an operating mode in which discharging and pneumatic pressure supply are simultaneously performed will be described here.

In the case where one of the pressure accumulation tanks 13a to 13c is at a high pressure near the storage pressure P3 and the pressure of one of the other pressure accumulation tanks is lowered to approximately the predetermined pressure P2, the compressed air whose pressure is approximately the predetermined pressure P2 can be supplied from the pressure accumulation tank 13 to the pneumatic apparatus M1 while driving the expanders 14a and 14b with the compressed air whose pressure is near the storage pressure P3 even in the present embodiment, as similar to the first embodiment.

In addition, in the case of the present embodiment, the valve Ve is closed, the valve V35 is opened, and the compressed air which is expanded by the expander 14a of the first stage using the compressed air from the same pressure accumulation tank and whose pressure is lowered can be supplied to the pneumatic apparatus M1 via the pipe 35 as described above. At this time, in the case where the pressure after the one-stage expansion, which is detected by the pressure sensor Se, is not lowered to approximately the predetermined pressure P2, the opening degree of the valve Ve is adjusted to be opened without being fully closed, so that the expander 14b can be driven to generate electric power while adjusting the rotational speed of the generator 15b, and the pressure of the compressed air for pneumatic pressure supply can be adjusted.

### (2-4) Electric power supply and demand adjustment

Switching of an operating mode and electric power supply and demand adjustment of the CAES device 1 of the present embodiment will be described.

### (2-4a) In the case where the amount of electric power generation exceeds demand for electric power

In the case where the amount of electric power generated by the renewable energy power generation device connected to the power transmission and distribution system 5 exceeds the amount of electric power used by the plant M and surplus electric power is generated, the CAES device 1 is operated in the operating mode in which charging is performed. At this time, in the case where the demand for operating the pneumatic apparatus M1 is large and the amount of pneumatic pressure usage is large, the CAES device 1 is operated in the operating mode in which charging and pneumatic pressure supply are simultaneously performed, and the pneumatic pressure used by the pneumatic apparatus M1 is supplied from the pressure accumulation tank 13 without passing through the expander 14a.

### (2-4b) In the case where the amount of electric power generation falls below demand for electric power

In the case where the amount of electric power generated by the renewable energy power generation device connected to the power transmission and distribution system 5 is less than the amount of electric power used by the plant M, the CAES device 1 is operated in the operating mode in which discharging is performed, produces electric power from the compressed air, and supplies it to the power transmission and distribution system 5. At this time, in the case where the demand for operating the pneumatic apparatus M1 is large and the amount of pneumatic pressure usage is large, the CAES device 1 is operated in the operating mode in which discharging and pneumatic pressure supply are simultaneously performed.

Here, in the case where there is a pressure accumulation tank whose pressure is lowered to approximately the predetermined pressure P2, a pneumatic pressure is supplied from the pressure accumulation tank whose pressure is approximately the predetermined pressure P2 to the pneumatic apparatus M1 without passing through the expander 14a, and the compressed air is supplied from another pressure accumulation tank whose pressure is close to the storage pressure P3 to the expanders 14a and 14b to drive the generators 15a and 15b even in the present embodiment, as similar to the first embodiment.

In the present embodiment, in the case where there is no pressure accumulation tank whose pressure is lowered to approximately the predetermined pressure P2, the compressed air having a high pressure close to the storage pressure P3 is supplied from one of the pressure accumulation tanks 13a to 13c to the expander 14a, and the compressed air whose pressure is lowered by the expander 14a is supplied to the pneumatic apparatus M1 through the pipe 35 while generating electric power by driving the expander 14a of the first stage. For example, in the case where the compressed air is supplied from the pressure accumulation tank 13a, when the pressure of the pressure accumulation tank 13a is lowered to the predetermined pressure P2 while the pressure of the pressure accumulation tank 13a is monitored by the pressure sensor S31, the valve VL1 is closed, the valve V31 is opened, and the mode is switched to a mode in which the compressed air whose pressure is lowered to the predetermined pressure P2 is supplied from the pressure accumulation tank 13a to the pneumatic apparatus M1 via the pipe 31 without passing through the expander 14a. At the same time, the compressed air is supplied from another pressure accumulation tank 13b or 13c to the expanders 14a and 14b to drive the generators 15a and 15b.

### (2-5) Effect

Even in the present embodiment, effects similar to those of the first embodiment can be obtained. In addition, in the present embodiment, the operating mode in which a pneumatic pressure is supplied by the pipe 35 can be performed while performing expansion and electric power generation by driving the expander 14a. Although the amount of electric power generation is reduced in this operating mode, the energy of the stored compressed air can be recovered at the expander 14a without loss when the pressure is lowered from the high-pressure pressure accumulation tank 13 to the pneumatic usage pressure P1 of the pneumatic apparatus M1. Therefore, energy loss due to the pneumatic pressure supply can be suppressed, and system efficiency (electric power recovery efficiency) can be improved as compared with the first embodiment. In the case where a larger amount of electric power generation is required, the expanders 14a and 14b are driven with a high-pressure pressure accumulation tank, and the operating mode is switched to an operating mode in which a pneumatic pressure is supplied from another pressure accumulation tank whose pressure is lowered to approximately the predetermined pressure P2. In this case, the system efficiency (pneumatic pressure / electric power recovery efficiency) of the CAES device 1, which includes the pneumatic pressure supply, can be improved by switching the operating mode by operating control incorporating the required amount of electric power generation, the demand for pneumatic pressure, the charging operating prediction (prediction of the amount of electric power generated by the renewable energy power generation device), and the like.

As described above, according to the present embodiment, the compressed air stored in the pressure accumulation tank 13 can be used for both the electric power generation and the pneumatic pressure supply without reducing the pressure more than necessary, and thus it is possible to provide the CAES device in which the system efficiency including the pneumatic pressure supply is high and the electric power supply and demand can be adjusted.

### (Third Embodiment)

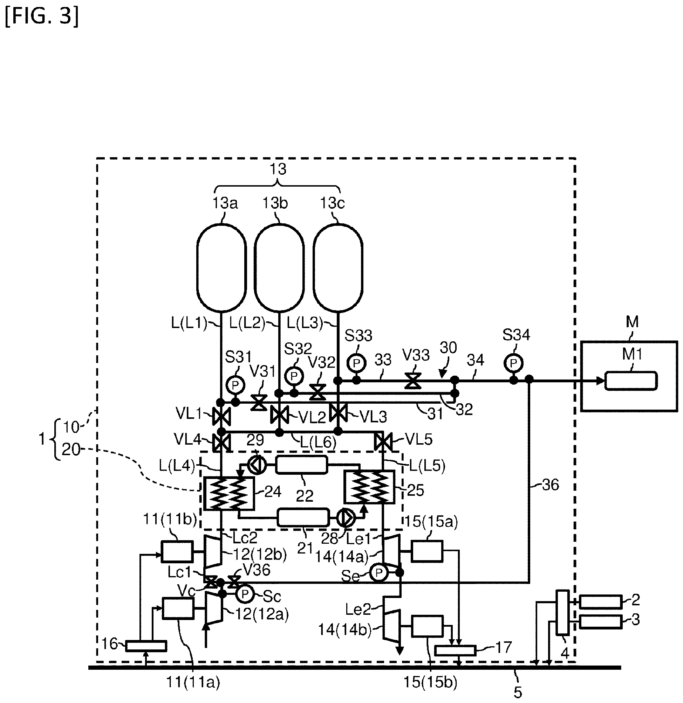

FIG. 3 is a schematic view of a CAES device according to a third embodiment of the present invention. Elements in FIG. 3 identical or corresponding to those of the embodiments already described are denoted by the same reference numerals as those of the already-presented drawings, and the description thereof is appropriately omitted.

### (3-1) CAES device

A CAES device 1 of the present embodiment is different from the first embodiment in that the pneumatic pressure supply pipe 30 includes a pipe 36 for connecting a pipe Lc1 that connects the compressor 12a of the low-pressure stage to the compressor 12b of the high-pressure stage to the pneumatic apparatus M1. In the present embodiment, the pipe 36 connects the pipes Lc1 and 34 to each other. In addition, a valve V36 is provided in the pipe 36, and a valve Vc is provided in the pipe Lc1 (a part on the compressor 12b side of the high-pressure stage relative to the branch portion of the pipe 36). The valves V36 and Vc are opening/closing valves similar to the valve V31 and the like. A pressure sensor Sc is provided at a part in the pipe Lc1 on the compressor 12a side of the low-pressure stage relative to the branch portion of the pipe 36. Other hardware configurations of the CAES device 1 of the third embodiment are similar to those of the first embodiment.

### (3-2) Basic operation

An operation of the CAES device 1 of the third embodiment will be described. Since the charging operation and the discharging operation in the present embodiment are similar to those of the first embodiment, a pneumatic pressure supply operation will be described here.

Even in the present embodiment, as similar to the first embodiment, a pneumatic pressure can be supplied to the pneumatic apparatus M1 sequentially from the pressure accumulation tank whose pressure is lowered to the predetermined pressure P2, and in the case where a plurality of pressure accumulation tanks having approximately the predetermined pressure P2 exists, the compressed air can be supplied to the pneumatic apparatus M1 from a pressure accumulation tank having a lower pressure being given priority.

In addition, in the present embodiment, since the pipe 36 is included in the pneumatic pressure supply pipe 30, for example, the valve Vc is closed, the valve V36 is opened, and only the compressor 12a of the compressors 12a and 12b is operated, so that the compressed air compressed by the compressor 12a can flow to the pipe 36, bypass the pressure accumulation tank 13, and be supplied to the pneumatic apparatus M1.

### (3-3) Operating mode

The operating modes that can be executed in the first embodiment can be performed even in the present embodiment, as similar to the first embodiment, in a state where the valve 36 is closed and the valve Vc is opened. In addition, in the present embodiment, an operating mode in which only pneumatic pressure supply is performed via the pipe 36, an operating mode in which pneumatic pressure supply is performed via the pipe 36 while the charging operation is performed, and the like can be performed.

In the operating mode in which only pneumatic pressure supply is performed via the pipe 36, the valve Vc is closed, the valve V36 is opened, and only the compressor 12a of the first stage of the compressors 12a and 12b is driven as described above. Accordingly, the compressed air whose pressure is compressed by the compressor 12a to approximately the predetermined pressure P2 can be supplied to the pneumatic apparatus M1 via the pipe 36 without being stored in the pressure accumulation tank 13 while the pressure is appropriately monitored by the pressure sensor Sc.

In addition, in the operating mode in which the pneumatic pressure supply is performed via the pipe 36 while the charging operation is performed, both of the valves Vc and V36 are opened to drive the compressors 12a and 12b. Accordingly, a part of the compressed air whose pressure is compressed by the compressor 12a to approximately the predetermined pressure P2 flows to the pipe 36 and is supplied to the pneumatic apparatus M1, and at the same time, the remaining compressed air discharged from the compressor 12a can be further compressed by the compressor 12b and stored in the pressure accumulation tank 13.

### (3-4) Electric power supply and demand adjustment

Switching of an operating mode and electric power supply and demand adjustment of the CAES device 1 of the present embodiment will be described.

### (3-4a) In the case where the amount of electric power generation exceeds demand for electric power

In the case where the amount of electric power generated by the renewable energy power generation device connected to the power transmission and distribution system 5 exceeds the amount of electric power used by the plant M and surplus electric power is generated, the CAES device 1 is operated in the operating mode in which charging is performed. At this time, in the case where the demand for operating the pneumatic apparatus M1 is large and the amount of pneumatic pressure usage is large, the CAES device 1 is operated in the operating mode in which charging and pneumatic pressure supply are simultaneously performed. In the case where the amount of generation of surplus electric power is large in the operating mode in which charging and pneumatic pressure supply are simultaneously performed, it is necessary to drive the compressors 12a and 12b mainly for charging, and thus the pneumatic pressure supply to the pneumatic apparatus M1 is performed by the pressure accumulation tank 13. In the case where the amount of generation of surplus electric power is small, since it is not necessary to drive both of the compressors 12a and 12b, the compressor 12b is stopped, the pneumatic pressure supply from the pressure accumulation tank 13 to the pneumatic apparatus M1 is stopped, the valve V36 is opened, and the compressed air discharged from the compressor 12a and having approximately the predetermined pressure P2 is supplied to the pneumatic apparatus M1.

### (3-4b) In the case where the amount of electric power generation falls below demand for electric power

In the case where the amount of electric power generated by the renewable energy power generation device connected to the power transmission and distribution system 5 is less than the amount of electric power used by the plant M, the CAES device 1 is operated in the operating mode in which discharging is performed, produces electric power from the compressed air, and supplies it to the power transmission and distribution system 5. At this time, in the case where the demand for operating the pneumatic apparatus M1 is large and the amount of pneumatic pressure usage is large, the CAES device 1 is operated in the operating mode in which discharging and pneumatic pressure supply are simultaneously performed.

Here, in the case where there is a pressure accumulation tank whose pressure is lowered to approximately the predetermined pressure P2, a pneumatic pressure is supplied from the pressure accumulation tank whose pressure is approximately the predetermined pressure P2 to the pneumatic apparatus M1 without passing through the expander 14a, and the compressed air is supplied from another pressure accumulation tank whose pressure is close to the storage pressure P3 to the expanders 14a and 14b to drive the generators 15a and 15b even in the present embodiment, as similar to the first embodiment.

In the present embodiment, in the case where there is no pressure accumulation tank whose pressure is lowered to approximately the predetermined pressure P2, the compressed air having a high pressure near the storage pressure P3 is supplied from one (for example, the pressure accumulation tank 13a) of the pressure accumulation tanks 13a to 13c to the expanders 14a and 14b, and the generators 15a and 15b are driven to generate electric power. At the same time, the compressor 12a is activated to open the valve V36, the compressed air compressed by the compressor 12a flows to the pipe 36, and is supplied to the pneumatic apparatus M1. While the pressure of the pressure accumulation tank 13a supplying the compressed air to the expanders 14a and 14b is monitored by the corresponding pressure sensor S31, when the pressure of the pressure accumulation tank 13a is lowered to the predetermined pressure P2, the valve V31 is opened, the operating mode is switched to an operating mode in which the compressed air is supplied from the pressure accumulation tank 13a to the pneumatic apparatus M1, and the valve V36 of the pipe 36 is closed to stop the compressor 12a.

### (3-5) Effect

Even in the present embodiment, effects similar to those of the first embodiment can be obtained. In addition, in the present embodiment, the operating mode in which the compressed air from the compressor 12a is supplied from the pipe 36 to the pneumatic apparatus M1 can be performed. In the operating mode in which the compressed air from the compressor 12a is supplied from the pipe 36 to the pneumatic apparatus M1, the charging amount is reduced, but since it is sufficient to compress the atmosphere to approximately the predetermined pressure P2 by the compressor 12a, the amount of energy used for pneumatic pressure supply can be suppressed, and a high-efficiency operation becomes possible. Since energy loss due to the pneumatic pressure supply can be suppressed, the system efficiency (electric power recovery efficiency) of the CAES device 1 can be improved. In the case where a larger charging amount is required, the mode is switched to a mode in which a pneumatic pressure is supplied from the pressure accumulation tank, but in this case, the system efficiency (pneumatic pressure / electric power recovery efficiency) including the pneumatic pressure supply can be improved by switching the operating mode by operating control incorporating the required charging amount, the demand for pneumatic pressure, the charging operating prediction, and the like.

### (Fourth Embodiment)

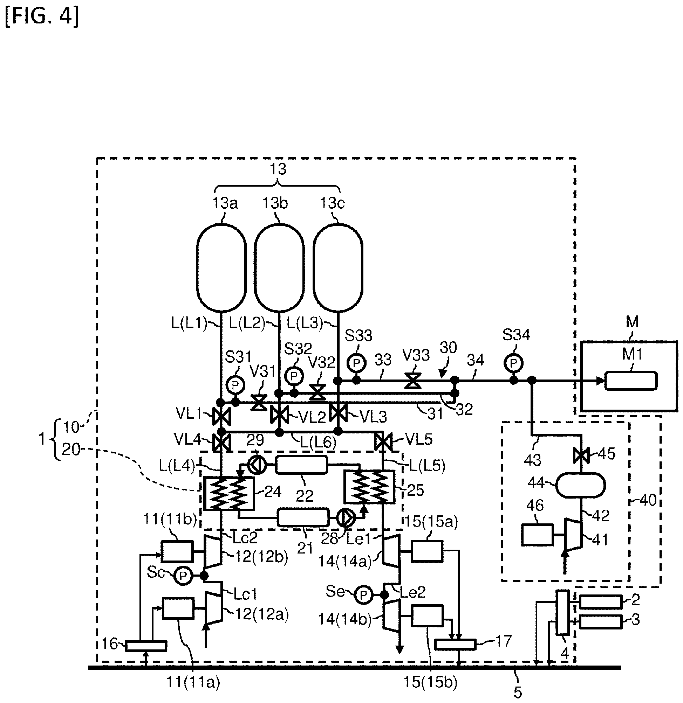

FIG. 4 is a schematic view of a CAES device according to a fourth embodiment of the present invention. Elements in FIG. 4 identical or corresponding to those of the embodiments already described are denoted by the same reference numerals as those of the already-presented drawings, and the description thereof is appropriately omitted.

### (4-1) CAES device

A CAES device 1 of the present embodiment is different from the first embodiment in that a pneumatic pressure supply unit 40 for supplying compressed air to the pneumatic apparatus M1 is provided. In the present embodiment, the pneumatic pressure supply unit 40 includes a pneumatic pressure supply compressor 41 dedicated for pneumatic pressure supply, which is different from the compressor 12, and pipes 42 and 43 connecting the pneumatic pressure supply compressor 41 to the pneumatic pressure supply pipe 30. The pipe 42 connects the pneumatic pressure supply compressor 41 to a pneumatic tank 44, and the pipe 43 connects the pneumatic tank 44 to the pipe 34 of the pneumatic pressure supply pipe 30. The pipe 43 is provided with a valve 45. The pneumatic pressure supply compressor 41 is driven by a motor (electric motor) 46 that is driven by grid electric power in the same manner as the compressors 12a and 12b. In the pneumatic pressure supply unit 40, the atmosphere is sucked by the pneumatic pressure supply compressor 41, the atmosphere is compressed to the pneumatic usage pressure P1 of the pneumatic apparatus M1 or the predetermined pressure P2, the compressed air is sent to the pneumatic tank 44 via the pipe 42, and then, the compressed air is supplied to the pneumatic apparatus M1 via the pipe 43 by opening and closing the valve 45. Other hardware configurations of the CAES device 1 of the fourth embodiment are similar to those of the first embodiment.

### (4-2) Basic operation

An operation of the CAES device 1 of the fourth embodiment will be described. Since the charging operation and the discharging operation in the present embodiment are similar to those of the first embodiment, a pneumatic pressure supply operation will be described here.

Even in the present embodiment, as similar to the first embodiment, a pneumatic pressure can be supplied to the pneumatic apparatus M1 sequentially from the pressure accumulation tank whose pressure is lowered to the predetermined pressure P2, and in the case where a plurality of pressure accumulation tanks having approximately the predetermined pressure P2 exists, the compressed air can be supplied to the pneumatic apparatus M1 from a pressure accumulation tank having a lower pressure being given priority.

In addition, in the present embodiment, pneumatic pressure supply from the pneumatic pressure supply unit 40 can be performed in addition to the pneumatic pressure supply from the pressure accumulation tank 13. In the case where the compressed air is supplied from the pneumatic pressure supply unit 40 to the pneumatic apparatus M1, the valves V31 to V33 are closed to shut off the pneumatic pressure supply from the pressure accumulation tank 13, and the valve 45 of the pneumatic pressure supply unit 40 is opened to operate the pneumatic pressure supply compressor 41.

### (4-3) Operating mode

The operating modes that can be executed in the first embodiment can be performed even in the present embodiment, as similar to the first embodiment, in a state where the valve 45 is closed and the pneumatic pressure supply compressor 41 is stopped. In addition, in the present embodiment, an operating mode in which only pneumatic pressure supply by the pneumatic pressure supply compressor 41 is performed, an operating mode in which pneumatic pressure supply by the pneumatic pressure supply compressor 41 is performed while the charging operation is performed, and the like can be performed.

First, in the operating mode in which only pneumatic pressure supply by the pneumatic pressure supply compressor 41 is performed, the pneumatic pressure supply compressor 41 is operated by opening the valve 45 of the pneumatic pressure supply unit 40 as described above in a state where the compressors 12a and 12b and the expanders 14a and 14b are stopped and the valves V31 to V33 are closed.

Next, in the operating mode in which pneumatic pressure supply by the pneumatic pressure supply compressor 41 is performed while the charging operation is performed, the charging operation for storing the compressed air by the compressors 12a and 12b and the pneumatic pressure supply operation by the pneumatic pressure supply unit 40 can be simultaneously performed by driving the compressors 12a and 12b and the pneumatic pressure supply compressor 41 in a state where the valves V31 to V33 are closed.

### (4-4) Electric power supply and demand adjustment

Switching of an operating mode and electric power supply and demand adjustment of the CAES device 1 of the present embodiment will be described.

### (4-4a) In the case where the amount of electric power generation exceeds demand for electric power

In the case where the amount of electric power generated by the renewable energy power generation device connected to the power transmission and distribution system 5 exceeds the amount of electric power used by the plant M and surplus electric power is generated, the CAES device 1 is operated in the operating mode in which charging is performed. At this time, in the case where the demand for operating the pneumatic apparatus M1 is large and the amount of pneumatic pressure usage is large, the CAES device 1 is operated in the operating mode in which charging and pneumatic pressure supply are simultaneously performed. In the case where the amount of generation of surplus electric power is large in the operating mode in which charging and pneumatic pressure supply are simultaneously performed, it is necessary to drive the compressors 12a and 12b mainly for charging, and thus the pneumatic pressure supply to the pneumatic apparatus M1 is performed by the pneumatic pressure supply unit 40. In the case where the amount of generation of surplus electric power is small, since it is not necessary to drive both of the compressors 12a and 12b, the pneumatic pressure supply by the pneumatic pressure supply unit 40 is stopped, and the pneumatic pressure supply is switched to pneumatic pressure supply by the pressure accumulation tank 13. The pneumatic pressure supply method by the pressure accumulation tank 13 has already been described. In the case where the pneumatic pressure supply by the pressure accumulation tank 13 is sufficient, the pneumatic pressure supply unit 40 is stopped, so that the demand for electric power used by the pneumatic pressure supply unit 40 can be suppressed.

### (4-4b) In the case where the amount of electric power generation falls below demand for electric power

In the case where the amount of electric power generated by the renewable energy power generation device connected to the power transmission and distribution system 5 is less than the amount of electric power used by the plant M, the CAES device 1 is operated in the operating mode in which discharging is performed, produces electric power from the compressed air, and supplies it to the power transmission and distribution system 5. At this time, in the case where the demand for operating the pneumatic apparatus M1 is large and the amount of pneumatic pressure usage is large, the CAES device 1 is operated in the operating mode in which discharging and pneumatic pressure supply are simultaneously performed.

Here, in the case where there is a pressure accumulation tank whose pressure is lowered to approximately the predetermined pressure P2, a pneumatic pressure is supplied from the pressure accumulation tank whose pressure is approximately the predetermined pressure P2 to the pneumatic apparatus M1 without passing through the expander 14a, and the compressed air is supplied from another pressure accumulation tank whose pressure is close to the storage pressure P3 to the expanders 14a and 14b to drive the generators 15a and 15b even in the present embodiment, as similar to the first embodiment.

In the present embodiment, in the case where there is no pressure accumulation tank whose pressure is lowered to approximately the predetermined pressure P2, the compressed air having a high pressure close to the storage pressure P3 is supplied from one (for example, the pressure accumulation tank 13a) of the pressure accumulation tanks 13a to 13c to the expanders 14a and 14b, and the generators 15a and 15b are driven to generate electric power. At the same time, the pneumatic pressure supply compressor 41 is activated using the pneumatic pressure supply unit 40 to open the valve 45, and the compressed air compressed by the pneumatic pressure supply compressor 41 flows to the pipe 43 to be supplied to the pneumatic apparatus M1. While the pressure of the pressure accumulation tank 13a supplying the compressed air to the expanders 14a and 14b is monitored by the corresponding pressure sensor S31, when the pressure of the pressure accumulation tank 13a is lowered to the predetermined pressure P2, the valve V31 is opened, the operating mode is switched to an operating mode in which the compressed air is supplied from the pressure accumulation tank 13a to the pneumatic apparatus M1, and the pneumatic pressure supply unit 40 is stopped.

### (4-5) Effect

Even in the present embodiment, effects similar to those of the first embodiment can be obtained. In addition, in the present embodiment, the operating mode in which the pneumatic pressure supply is performed by the pneumatic pressure supply unit 40 can be performed. Although the demand for electric power of the CAES 1 increases in the operating mode in which the pneumatic pressure supply is performed by the pneumatic pressure supply unit 40, since the pneumatic pressure supply unit 40 is a dedicated apparatus for pneumatic pressure supply to the pneumatic apparatus M1, the specifications can be optimized for the pneumatic pressure supply, and the lowering of the system efficiency (electric power recovery efficiency) can be suppressed.

### (Fifth Embodiment)

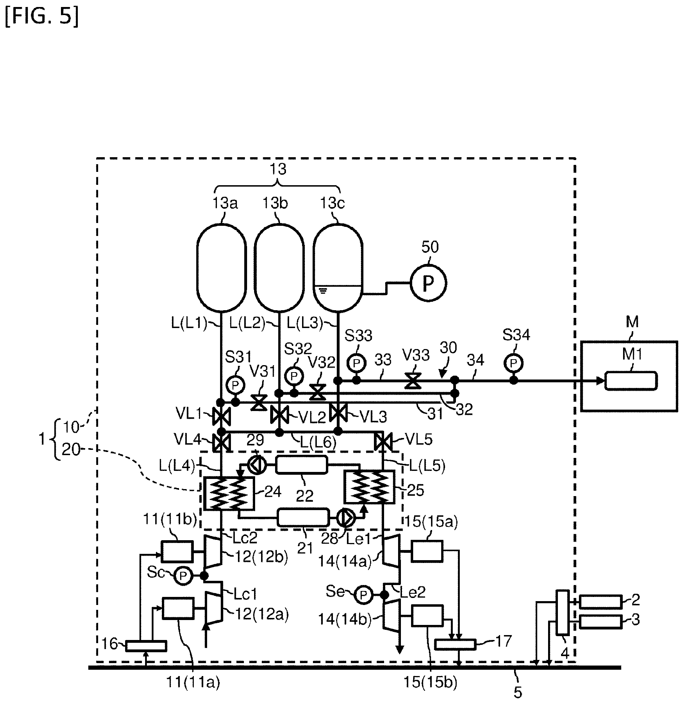

FIG. 5 is a schematic view of a CAES device according to a fifth embodiment of the present invention. Elements in FIG. 5 identical or corresponding to those of the embodiments already described are denoted by the same reference numerals as those of the already-presented drawings, and the description thereof is appropriately omitted.

A CAES device 1 of the present embodiment is different from the first embodiment in that a water supply pump 50 that is connected to the pressure accumulation tank 13 and raises the tank pressure of the pressure accumulation tank 13 is provided. Although FIG. 5 exemplifies a configuration in which water is injected into the pressure accumulation tank 13c by the water supply pump 50, a configuration in which water can be injected into at least one of the pressure accumulation tanks 13a to 31c from the water supply pump 50 can be adopted. In the present embodiment, for example, in the case where the pressure of the pressure accumulation tank 13 to be used for pneumatic pressure supply is less than the predetermined pressure P2 or the pneumatic usage pressure P1 and a pneumatic pressure cannot be supplied to the pneumatic apparatus M1, water is injected into the pressure accumulation tank 13 by the water supply pump 50 to raise the internal pressure of the pressure accumulation tank 13, the pressure of the compressed air whose pressure is less than the predetermined pressure P2 is raised, and the compressed air can be supplied to the pneumatic apparatus M1. In addition, for example, while the pressure of the pressure accumulation tank 13 that decreases according to the pneumatic pressure supply is monitored by the pressure sensors S31 to S33, when the pressure of the pressure accumulation tank 13 is lowered to the predetermined pressure P2 or the pneumatic usage pressure P1 (or a set value set by providing a margin to each of these values), the pressure of the pressure accumulation tank 13 can be maintained at a pressure, which enables the pneumatic pressure supply, by driving the water supply pump 50, and the pneumatic pressure supply can be continued. In this case, the driving and stopping of the water supply pump 50 can be feedback-controlled using the predetermined pressure P2 or the pneumatic usage pressure P1 (or a set value set by providing a margin to each of these values) as a threshold value.

The pneumatic pressure supply by the pressure accumulation tank 13 using such a water supply pump 50 can be performed simultaneously with the charging operation and the discharging operation. For example, in the case where the pressure accumulation tanks 13a and 13b are at a high pressure of approximately the storage pressure P3 while the pressure of the pressure accumulation tank 13c is less than the predetermined pressure P2, the pneumatic pressure supply can be performed from the pressure accumulation tank 13c while discharging using the pressure accumulation tank 13a and raising of the pressure by the water supply pump 50 are performed. In addition, for example, in the case where the pressures of both of the pressure accumulation tanks 13b and 13c are less than the predetermined pressure P2, the pneumatic pressure supply can also be performed from the pressure accumulation tank 13c while storing of the compressed air in the pressure accumulation tank 13b and raising of the pressure by the water supply pump 50 are performed.

In addition, in the case where the pressure of the pressure accumulation tank 13 is less than the pressure usable for the discharging operation, it is also possible to use the water supply pump 50 to raise the pressure of the pressure accumulation tank 13 to the pressure usable for the discharging operation.

The water injected into the pressure accumulation tank 13 from the water supply pump 50 is appropriately drained from a drain pipe (not illustrated) when the compressed air is stored in the pressure accumulation tank 13.

Other hardware configurations of the CAES device 1 of the fifth embodiment are similar to those of the first embodiment. In addition to the above-described pneumatic pressure supply operation and discharging operation using the water supply pump 50 and the corresponding operating modes, the basic operation, the operating modes, the electric power supply and demand adjustment, and the like that can be performed in the first embodiment can also be performed in the present embodiment.

Even in the present embodiment, effects similar to those of the first embodiment can be obtained. In addition, in the present embodiment, even in the case where the pressure of the pressure accumulation tank 13 is less than the pressure at which pneumatic pressure supply can be performed, the pressure of the pressure accumulation tank 13 can be raised by the water supply pump 50 to perform the pneumatic pressure supply as described above. Although the demand for electric power of the CAES 1 increases in the operating mode in which the water supply pump 50 is driven, since the water supply pump 50 is a dedicated apparatus for pneumatic pressure supply to the pneumatic apparatus M1, the specifications can be optimized for the pneumatic pressure supply, and the lowering of the system efficiency (electric power recovery efficiency) can be suppressed.

### (Sixth Embodiment)

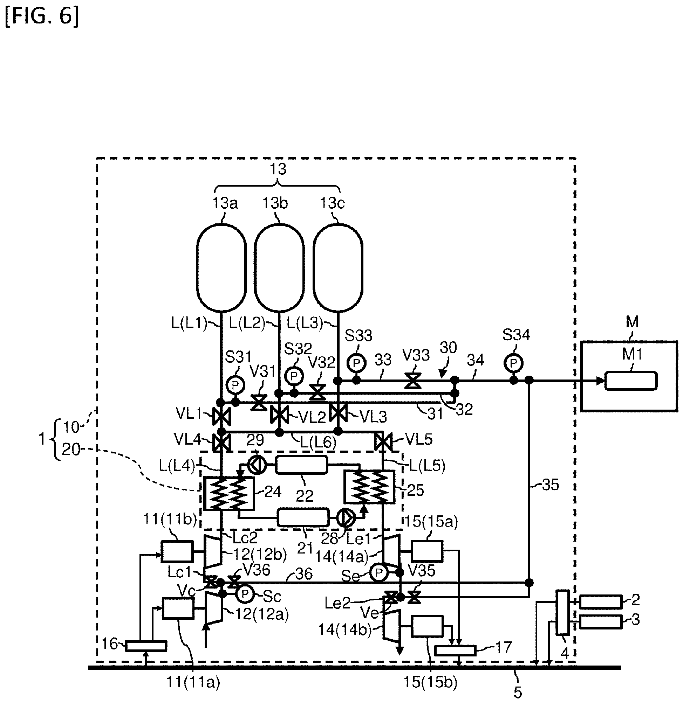

FIG. 6 is a schematic view of a CAES device according to a sixth embodiment of the present invention. Elements in FIG. 6 identical or corresponding to those of the embodiments already described are denoted by the same reference numerals as those of the already-presented drawings, and the description thereof is appropriately omitted.

The present embodiment is an example obtained by combining the second embodiment and the third embodiment with each other. The operations and the operating modes that can be performed in the second embodiment or the third embodiment can also be performed in the present embodiment. The switching of each operating mode can be performed by operating control incorporating the required charging amount, the amount of required electric power generation, the demand for pneumatic pressure, the charging/discharging operating prediction, and the like. The system efficiency (pneumatic pressure / electric power recovery efficiency) including a pneumatic pressure can be improved by switching the operating mode.

As in this example, optional two or more embodiments among the first to fifth embodiments described above can be combined.

### (Seventh Embodiment)

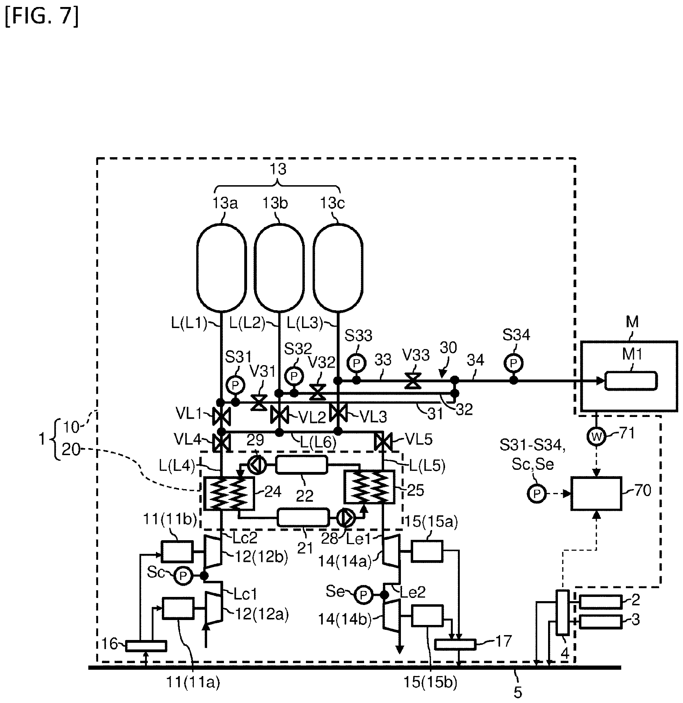

FIG. 7 is a schematic view of a CAES device according to a seventh embodiment of the present invention. Elements in FIG. 7 identical or corresponding to those of the embodiments already described are denoted by the same reference numerals as those of the already-presented drawings, and the description thereof is appropriately omitted.

The present embodiment is an example for depicting a specific hardware configuration for performing control such as switching of a valve mentioned in each embodiment. In FIG. 7, the CAES device 1 is provided with a control device 70 having a function of controlling the valves V31 to V33 and VL1 to VL5 on the basis of the pressure of the pneumatic pressure supply pipe 30 detected by the pressure sensors S31 to S34. In the present embodiment, an example in which the control device 70 is added to the first embodiment will be described, but even in the second to sixth embodiments, the control such as switching of a valve can be performed by adding the control device 70 in the similar manner.

The pressure sensors S31 to S34, Sc, and Se, the power conditioner 4, and a power meter 71 of the plant M (a computer or the like in a management room of the plant M may be used) are connected to the control device 70, and data such as the detected pressures of the pressure sensors S31 to S34, Sc, and Se, the amount of electric power generated by the renewable energy power generation device, and the demand for electric power of the plant M (the demand for electric power of the entire plant M and the demand for electric power of the pneumatic system) is input. The control device 70 is a computer for executing a control program or the like of the CAES device 1. In the present embodiment, the valves V31 to V33 and VL1 to VL5 are electromagnetically driven. Although not illustrated, the control device 70 is electrically connected to electric apparatuses such as the valves V31 to V33 and VL1 to VL5, the motors 11a and 11b, the generators 15a and 15b, and the pumps 28 and 29, and outputs operation commands to these electric apparatuses. For example, the control device 70 can output opening/closing commands to the valves V31 to V33 and VL1 to VL5, activation commands / stop commands / rotational speed commands to the motors 11a and 11b and the pumps 28 and 29, rotational speed commands to the generators 15a and 15b, and the like.

The control device 70 inputs the amount of electric power generation of the renewable energy power generation device input from the power conditioner 4, the amount of electric power usage of the plant M input from the power meter 71, and the pressure of the pneumatic pressure supply pipe 30 detected by the pressure sensors S31 to S34, and, for example, in the case where the amount of electric power generated by the renewable energy power generation device is less than the amount of electric power used by the plant M and the pressure of the pneumatic pressure supply pipe 30 is equal to or higher than the pneumatic usage pressure P1 and equal to or lower than the predetermined pressure P2, the valves V31 to V33 are appropriately opened to supply the compressed air from the pneumatic pressure supply pipe 30 to the pneumatic apparatus M1. For example, in the case where only the pressure accumulation tank 13c (pipe 33) among the pressure accumulation tanks 13a to 13c (pipes 31 to 33) is in the above pressure range, the valve V33 is opened and pneumatic pressure supply is performed using the pressure accumulation tank 13c.

In order to automatically control such electric apparatuses including the valves V31 to V33 and VL1 to VL5, it is necessary to determine the operating mode to be selected by the control device 70. In order to determine the operating mode, first, as described in the explanation of "electric power supply and demand adjustment" of the first embodiment and the like, it is necessary to determine the magnitude relation between the amount of electric power generated by the renewable energy power generation device and the amount of electric power used by the plant M. This can be determined by the control device 70 on the basis of the amount of electric power generation of the renewable energy power generation device input from the power conditioner 4 and the amount of electric power usage of the plant M input from the power meter 71. Thus, the control device 70 selects the operating mode in which the charging operation is performed in the case where the amount of electric power generation exceeds the amount of electric power usage, selects the operating mode in which the discharging operation is performed in the case where the amount of electric power generation is less than the amount of electric power usage, selects the operating mode in which only the pneumatic pressure supply operation is performed in the case where the amount of electric power generation and the amount of electric power usage are balanced with each other, and controls each electric apparatus according to the selected operating mode. At this time, in the case where the operating mode in which the charging operation is performed and the operating mode in which the discharging operation is performed are selected, whether or not to perform the pneumatic pressure supply operation together is determined on the basis of, for example, whether or not the demand for operating the pneumatic apparatus M1 of the plant M exceeds a preset threshold value. The demand for operating the pneumatic apparatus M1 can be estimated by, for example, the amount of electric power used by the pneumatic system (or the pipe pressure of the pneumatic system or the like).

By automatically operating the CAES device 1 as in the present embodiment, the CAES device 1 can be timely operated in a proper operating mode, and energy efficiency can be further improved.

### (Modified Example)

In each of the above-described embodiments, the renewable energy power generation device can be any device utilizing energy that is constantly (or repeatedly) replenished by natural forces such as wind power, solar light, solar heat, wave power or tidal power, running water or tide, and geothermal heat, and that fluctuates irregularly. In addition, the CAES device 1 of each embodiment can also be applied to a case where the demand for electric power of the plant M largely fluctuates depending on the driving states of apparatuses that consume large electric power in the plant M. In addition, the power transmission and distribution system 5 is not limited to a general power transmission and distribution system of an electric power company, but may be a microgrid electric power system in a region or the plant M.

In addition, the compressors 12a and 12b and the expanders 14a and 14b of each embodiment may use, for example, a screw type, but the types of these rotary machines are not limited. The compressors 12a and 12b and the expanders 14a and 14b may be of, for example, a scroll type, a turbo type, a reciprocating type, or the like.

In addition, as the compressor 12 and the expander 14, the compressors 12a and 12b are of a two-stage compression type and the expanders 14a and 14b are of a two-stage expansion type in each embodiment, but the compressor 12 may be of a single-stage compression type or of a compression type having three or more stages and the expander 14 may be of a single-stage expansion type or of an expansion type having three or more stages, or further, the number of stages may be different between compression and expansion. Further, although one compressor 12 and one expander 14 are illustrated in each of the drawings, the number of units is not particularly limited, and the CAES device 1 may be provided with a plurality of compressors 12 and expanders 14. In addition, a configuration in which the number of motors and the number of compressors are different from each other (for example, a case where a plurality of compressors is driven by one motor), and a configuration in which the number of generators and the number of expanders are different from each other (for example, a case where one generator is driven by a plurality of expanders) are adopted in some cases.

In addition, in the example of, for example, FIG. 2, a configuration in which the compressed air is extracted from the pipe Le2 connecting the expander 14a of the highpressure stage of a multi-stage expansion type and the expander 14b of the low-pressure stage to each other is exemplified, but, for example, a configuration in which the compressed air is extracted from a middle stage of a single-stage expander can be adopted. The same applies to the example of FIG. 3, and a configuration in which the compressed air is extracted from a middle stage of a single-stage compressor can be adopted.

### Description of Reference Characters

1: CAES device (compressed air energy storage device)
2: solar power generation device (renewable energy power generation device)
3: wind power generation device (renewable energy power generation device)
11: electric motor
12: compressor
12a: compressor (low pressure compressor)
12b: compressor (high pressure compressor)
13: pressure accumulation tank
14: expander
14a: expander (high pressure expander)
14b: expander (low pressure expander)
15: generator
30: pneumatic pressure supply pipe
31 to 36: pipe
41: pneumatic pressure supply compressor
42, 43: pipe
50: water supply pump
70: control device
Lc1, Le2: pipe
M: plant (facility using a pneumatic apparatus)
M1: pneumatic apparatus
P1: pneumatic usage pressure
P2: predetermined pressure
S33 to S34: pressure sensor
V31 to V33: valve (opening/closing valve)

## Claims

1. A compressed air energy storage device comprising:
a compressor that is driven by an electric motor;
a pressure accumulation tank that stores compressed air compressed by the compressor;
an expander that is driven by the compressed air stored in the pressure accumulation tank;
a generator that is driven by the expander; and
a pneumatic pressure supply pipe that supplies the compressed air to a pneumatic apparatus driven by a pneumatic pressure, wherein
the compressor compresses air to a pressure exceeding a predetermined pressure set higher than a pneumatic usage pressure for driving the pneumatic apparatus,
compressed air whose pressure exceeds the predetermined pressure is supplied to the expander to generate electric power, and
compressed air whose pressure is equal to or lower than the predetermined pressure is supplied to the pneumatic apparatus via the pneumatic pressure supply pipe.

2. The compressed air energy storage device according to claim 1, wherein
the compressed air energy storage device includes
a pressure sensor that detects a pressure of the pneumatic pressure supply pipe,
an opening/closing valve that is provided in the pneumatic pressure supply pipe, and
a control device that controls the opening/closing valve on a basis of the pressure of the pneumatic pressure supply pipe detected by the pressure sensor,
the electric motor is driven by electric power from a power transmission and distribution system to which a renewable energy power generation device is connected, and
the control device
inputs an amount of electric power generated by the renewable energy power generation device, an amount of electric power used by a facility using the pneumatic apparatus, and the pressure of the pneumatic pressure supply pipe detected by the pressure sensor, and
in a case where the amount of electric power generation is less than the amount of electric power usage and the pressure of the pneumatic pressure supply pipe is equal to or higher than the pneumatic usage pressure and equal to or lower than the predetermined pressure, opens the opening/closing valve to supply the compressed air from the pneumatic pressure supply pipe to the pneumatic apparatus.

3. The compressed air energy storage device according to claim 1, wherein
the pneumatic pressure supply pipe includes a pipe for connecting the pressure accumulation tank and the pneumatic apparatus to each other.

4. The compressed air energy storage device according to claim 1, wherein
the expander includes a high pressure expander driven by compressed air from the pressure accumulation tank and a low pressure expander driven by compressed air discharged from the high pressure expander, and
the pneumatic pressure supply pipe includes a pipe for connecting a pipe connecting the high pressure expander to the low pressure expander to the pneumatic apparatus.

5. The compressed air energy storage device according to claim 1, wherein
the compressor includes a low pressure compressor and a high pressure compressor for compressing compressed air compressed by the low pressure compressor, and
the pneumatic pressure supply pipe includes a pipe for connecting a pipe connecting the low pressure compressor to the high pressure compressor to the pneumatic apparatus.

6. The compressed air energy storage device according to claim 1, wherein
the compressed air energy storage device includes
a pneumatic pressure supply compressor that is different from the compressor, and
a pipe that connects the pneumatic pressure supply compressor and the pneumatic pressure supply pipe to each other.

7. The compressed air energy storage device according to claim 1, wherein
a water supply pump that is connected to the pressure accumulation tank and raises a tank pressure of the pressure accumulation tank is provided.
